# EUROPÄISCHE PATENTSCHRIFT

(11) **EP 3 755 586 B1**
(45) Veröffentlichungstag und Bekanntmachung des Hinweises auf die Patenterteilung: **26.06.2024**
(21) Anmeldenummer: 19700586.1
(22) Anmeldetag: 12.01.2019
(51) Int. Cl.: B60S 1/38, B60S 1/52

(54) **WISCHERVORRICHTUNG**
WIPER DEVICE
DISPOSITIF D'ESSUYAGE

(30) Priorität: 22.02.2018 DE 102018202714
(43) Veröffentlichungstag der Anmeldung: 30.12.2020
(73) Patentinhaber: Robert Bosch GmbH, 70442 Stuttgart (DE)
(72) Erfinder: KRAEMER, Godelieve, 76549 Huegelsheim (DE)
(86) Internationale Anmeldenummer: PCT/EP2019/050725
(87) Internationale Veröffentlichungsnummer: WO 2019/161990

(56) Entgegenhaltungen:
- EP-A1- 2 815 932
- DE-A1-102013 209 196
- FR-A1- 3 004 685
- FR-A1- 3 015 398
- US-A1- 2012 167 326
- US-A1- 2014 196 240
- US-A1- 2017 066 411

## Beschreibung

### Stand der Technik

Es ist bereits eine Wischervorrichtung mit einem Wischarmadapter und mit einem Wischblattadapter, wobei der Wischarmadapter dazu vorgesehen ist, in Haupterstreckungsrichtung des Wischblattadapters mit dem Wischblattadapter gekoppelt zu werden, und mit einem Wischblattarmelement einer Sprüheinheit vorgeschlagen worden. Eine gattungsgemäße Wischervorrichtung ist bereits aus der FR 3 004 685 A1 bekannt Die US 2012/167326 A1 offenbart ebenfalls eine Wischervorrichtung nach dem Stand der Technik.

### Offenbarung der Erfindung

Die Erfindung ist im beigefügten Anspruchssatz beschrieben.

Die Erfindung geht aus von einer Wischervorrichtung, insbesondere einer Scheibenwischervorrichtung, mit einem Wischarmadapter und mit einem Wischblattadapter, wobei der Wischarmadapter dazu vorgesehen ist, in Haupterstreckungsrichtung des Wischblattadapters mit dem Wischblattadapter gekoppelt zu werden, und mit einem Wischarmkanalelement einer Sprüheinheit.

Es wird vorgeschlagen, dass das Wischarmkanalelement dazu vorgesehen ist, in Haupterstreckungsrichtung des Wischblattadapters mit einem Wischblattkanalelement des Wischblattadapters gekoppelt zu werden.

Durch die erfindungsgemäße Ausgestaltung der Wischervorrichtung kann eine Montage und/oder Demontage einer Sprüheinheit, vorzugsweise eines Wischblattadapters mit einem Wischarmadapter und/oder besonders bevorzugt eines Wischarms mit einem Wischblatt, vereinfacht werden. Ferner kann insbesondere sonders vorteilhaft kann eine einheitliche Gestaltung erzielt werden, wobei insbesondere die Sprüheinheit zumindest teilweise von dem Wischarm und/oder dem Wischblatt verdeckt angeordnet ist.

Die Wischervorrichtung umfasst die Sprüheinheit.

Unter einer "Sprüheinheit" soll insbesondere eine Einheit verstanden werden, welche an einem Sprühen von Waschwasser beteiligte Bauteile eines Wischers umfasst, wie insbesondere einen Waschwasserkanal, ein Sprühdüsenelement, eine Düsenkopplung, eine Düsenöffnung und/oder dergleichen. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Insbesondere sind der Wischblattadapter und der Wischarmadapter entlang der Haupterstreckungsrichtung des Wischblattadapters miteinander koppelbar. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Insbesondere soll unter "gekoppelt" vorzugsweise lösbar und besonders bevorzugt werkzeuglos lösbar verbunden verstanden werden, und zwar insbesondere kraft- und/oder formschlüssig verbunden, wie beispielsweise durch Einklemmen, Einrasten, Einschneiden oder dergleichen. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Unter einem "Kanalelement" soll insbesondere ein Element verstanden werden, das zumindest teilweise zu einer Führung eines Waschwassers vorgesehen ist und das Waschwasser, in Strömungsrichtung gesehen, unmittelbar zumindest teilweise, vorzugsweise auf drei Seiten und besonders vorteilhaft vollständig umschließt. Vorzugsweise ist eine Haupterstreckung des Kanalelements parallel zur Strömungsrichtung des Waschwassers und zumindest 2-mal, insbesondere wenigstens 5-mal und vorteilhaft zumindest 10-mal länger als wenigstens eine Querschnittserstreckung des Kanalelements. Unter einem "Wischarmkanalelement" soll insbesondere ein Kanalelement verstanden werden, welches wischarmseitig angeordnet ist. Unter einem "Wischblattkanalelement" soll insbesondere ein Kanalelement verstanden werden, welches wischblattseitig angeordnet ist. Insbesondere weisen/weist der Wischblattadapter und/oder der Wischarmadapter zumindest einen Grundkörper auf, welcher in einem montierten Zustand des Wischblattadapters und/oder des Wischarmadapters zumindest teilweise, vorzugsweise zumindest zu einem Großteil und besonders bevorzugt vollständig zumindest das Wischarmkanalelement und/oder das Wischblattkanalelement überdeckt, insbesondere betrachtet in einer Richtung zumindest im Wesentlichen senkrecht zu einer Wischfläche. Unter "zumindest im Wesentlichen senkrecht" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen, wobei der Winkel insbesondere eine maximale Abweichung von insbesondere kleiner als 8°, vorteilhaft kleiner als 5° und besonders vorteilhaft kleiner als 2°, aufweist. Unter dem Ausdruck "zumindest zu einem Großteil" sollen dabei insbesondere zumindest zu 55 %, vorzugsweise zumindest zu 65 %, bevorzugt zumindest zu 75 %, besonders bevorzugt zumindest zu 85 % und ganz besonders bevorzugt zumindest zu 95 % verstanden werden. Insbesondere sind das Wischarmkanalelement und das Wischblattkanalelement in einem gekoppelten Zustand wasserdicht miteinander verbunden. Das Wischarmkanalelement und das Wischblattkanalelement bilden in einem gekoppelten Zustand insbesondere zumindest teilweise, vorzugsweise zumindest zu einem Großteil einen Waschwasserkanal der Sprüheinheit aus.

Ferner wird vorgeschlagen, dass das Wischblattkanalelement des Wischblattadapters eine Haupterstreckung aufweist, welche zumindest im Wesentlichen parallel zur Haupterstreckungsrichtung des Wischblattadapters ausgerichtet ist. Hierdurch kann vorteilhaft eine Montage weiter vereinfacht werden. Insbesondere kann ein Bauraum eingespart werden. Unter einer "Haupterstreckung" eines Objekts soll dabei insbesondere eine längste Erstreckung eines kleinsten geometrischen Quaders verstanden werden, welcher das Objekt gerade noch vollständig umschließt. Unter "zumindest im Wesentlichen parallel" soll insbesondere eine Ausrichtung einer Richtung relativ zu einer Bezugsrichtung verstanden werden, wobei die Richtung und die Bezugsrichtung, insbesondere in einer Ebene betrachtet, einen Winkel von 0° einschließen, wobei der Winkel insbesondere eine maximale Abweichung von insbesondere kleiner als 8°, vorteilhaft kleiner als 5° und besonders vorteilhaft kleiner als 2°, aufweist. Ferner weist insbesondere das Wischarmkanalelement eine Haupterstreckung auf, welche zumindest im Wesentlichen parallel zur Haupterstreckungsrichtung des Wischarmadapters ausgerichtet ist. Insbesondere wenn der Wischarmadapter und der Wischblattadapter zueinander zumindest im Wesentlichen parallel ausgerichtet sind, sind auch das Wischarmkanalelement und das Wischblattkanalelement zumindest im Wesentlichen parallel zueinander angeordnet.

Ferner wird vorgeschlagen, dass das Wischblattkanalelement des Wischblattadapters zumindest teilweise einstückig an einen Grundkörper des Wischblattadapters angeformt ist. Hierdurch kann vorteilhaft eine Montage weiter vereinfacht werden. Ferner können insbesondere zusätzliche Bauteile vermieden werden. Unter "zumindest teilweise einstückig" soll in diesem Zusammenhang insbesondere verstanden werden, dass ein Objekt zumindest ein Bauteil aufweist, welches einstückig mit zumindest einem weiteren Bauteil des Objekts verbunden ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere kann das Wischarmkanalelement des Wischarmadapters zumindest teilweise einstückig an einen Grundkörper des Wischarmadapters angeformt sein. Alternativ könnte das Wischarmkanalelement auch separat von dem Wischarmadapter ausgebildet sein. Insbesondere ist das Wischarmkanalelement separat mit einem Wischarm und/oder einem Wischarmadapter koppelbar.

Ferner wird vorgeschlagen, dass das Wischblattkanalelement des Wischblattadapters zumindest teilweise als zylinderförmige Aussparung ausgebildet und dazu vorgesehen ist, das Wischarmkanalelement zu einer Kopplung in Haupterstreckungsrichtung des Wischblattadapters zu führen. Hierdurch kann vorteilhaft eine Montage weiter vereinfacht werden. Insbesondere kann eine passgenaue Montage erzielt werden. Insbesondere weist die Aussparung eine Verjüngung, vorzugsweise entlang der Haupterstreckung des Wischblattkanalelements auf. Die Verjüngung kann dabei insbesondere kontinuierlich und/oder stufenhaft ausgebildet sein.

Erfindungsgemäß weist der Wischblattadapter zumindest ein Sprühdüsenelement auf, welches zumindest teilweise einstückig mit dem Wischblattkanalelement des Wischblattadapters ausgebildet ist. Hierdurch kann eine flexible Bereitstellung von Wischwasser erzielt werden. Insbesondere kann das Wischblattadapterelement zumindest zwei und besonders bevorzugt mehrere Sprühdüsenelemente umfassen. Erfindungsgemäß ist das Sprühdüsenelement von dem Grundkörper des Wischblattadapters zumindest einem Großteil und besonders bevorzugt vollständig überdeckt, insbesondere betrachtet in einer Richtung senkrecht zu einer Wischfläche. Ferner kann der Wischblattadapter weitere Sprühdüsenelemente aufweisen. Vorzugsweise weist das Sprühdüsenelement zumindest zwei Düsenöffnungen auf, welche vorzugsweise in zwei verschiedene Richtungen gerichtet sind.

Ferner wird vorgeschlagen, dass das Wischarmkanalelement einen Dichtungsvorsprung aufweist, welcher dazu vorgesehen ist, sich in eine Wandung des Wischblattkanalelements zumindest teilweise einzuklemmen. Hierdurch kann vorteilhaft eine Dichtwirkung verbessert werden. Ferner kann eine Kopplung besonders gesichert werden. Insbesondere schneidet der Dichtungsvorsprung zumindest teilweise in die Wandung ein. Insbesondere schneidet der Dichtungsvorsprung in einem montierten Zustand des Wischblattkanals mit dem Wischarmkanal in die Wandung im Bereich der Aussparung des Wischblattadapters ein. Besonders bevorzugt weist der Dichtungsvorsprung zumindest teilweise eine Konusform auf. Hierdurch kann vorteilhaft eine Montage weiter vereinfacht werden, da ein derartiger konusförmiger Dichtungsvorsprung leicht in die Aussparung des Wischblattadapters eingeführt werden kann. Ferner verhindert die Konusform vorteilhaft ein Herausziehen des Dichtungsvorsprungs aus der Aussparung. Zudem kann insbesondere eine besonders vorteilhafte wasserdichte Dichtwirkung erzielt werden.

Ferner wird vorgeschlagen, dass das Wischarmkanalelement zumindest ein Sprühdüsenelement aufweist, welches in einem montierten Zustand außerhalb des Wischblattkanalelements angeordnet ist. Hierdurch kann vorteilhaft eine Flexibilität einer Bereitstellung von Wischwasser weiter verbessert werden. Insbesondere ist das Sprühdüsenelement außerhalb eines kleinsten gedachten Quaders angeordnet, welcher das Wischblattkanalelement gerade noch vollständig umschließt. Vorzugsweise ist das Sprühdüsenelement von dem Grundkörper des Wischblattadapters zumindest teilweise, vorzugsweise zumindest zu einem Großteil und besonders bevorzugt vollständig überdeckt, insbesondere betrachtet in einer Richtung senkrecht zu einer Wischfläche.

Ferner wird vorgeschlagen, dass der Wischblattadapter wenigstens ein Führungselement aufweist, welches bei einer Kopplung mit dem Wischarmadapter dazu vorgesehen ist, den Wischarmadapter zumindest teilweise zu führen. Hierdurch kann vorteilhaft eine Montage vereinfacht werden. Vorzugsweise bildet das Wischblattkanalelement das Führungselement aus. Ferner weist der Wischarmadapter wenigstens ein korrespondierendes Führungselement auf, welches korrespondierend zu dem Führungselement des Wischblattadapters ausgebildet ist. Vorzugsweise ist das korrespondierende Führungselement von dem Wischarmkanalelement ausgebildet.

In einem weiteren, nicht beanspruchten Aspekt der Erfindung wird ein Verfahren zur Montage einer Wischervorrichtung, insbesondere der zuvor genannten Wischervorrichtung, vorgeschlagen, bei welchem ein Wischarmadapter mit einem Wischblattadapter in Haupterstreckungsrichtung des Wischblattadapters gekoppelt wird, wobei in zumindest einem Verfahrensschritt ein Wischarmkanalelement einer Sprüheinheit in Haupterstreckungsrichtung des Wischblattadapters mit einem Wischblattkanalelement des Wischblattadapters gekoppelt wird. Durch die erfindungsgemäße Ausgestaltung des Verfahrens kann eine Montage und/oder Demontage einer Sprüheinheit, vorzugsweise eines Wischblattadapters mit einem Wischarmadapter und/oder besonders bevorzugt eines Wischarms mit einem Wischblatt, vereinfacht werden. Ferner kann insbesondere eine dichte und wieder lösbare Verbindung der Sprüheinheit erzielt werden. Besonders vorteilhaft kann eine einheitliche Gestaltung erzielt werden, wobei insbesondere die Sprüheinheit zumindest teilweise von dem Wischarm und/oder dem Wischblatt verdeckt angeordnet ist. Insbesondere werden der Wischblattadapter und der Wischarmadapter bei einer Montage entlang ihrer Haupterstreckungsrichtungen parallel und vorzugsweise zusammenfallend angeordnet. Besonders bevorzugt fallen die jeweiligen Haupterstreckungsrichtungen des Wischblattadapters und des Wischarmadapters mit einer Montagerichtung zusammen. Vorzugsweise werden der Wischblattadapter und der Wischarmadapter durch Aufeinanderzubewegen, insbesondere in Montagerichtung, ineinander eingeklipst.

Weiterhin wird vorgeschlagen, dass in dem Verfahrensschritt das Wischarmkanalelement automatisch mit dem Wischblattkanalelement gekoppelt wird, wenn der Wischarmadapter mit dem Wischblattadapter gekoppelt wird. Hierdurch kann eine Montage weiter verbessert werden. Darunter, dass eine Kopplung automatisch mit einer weiteren Kopplung stattfindet, soll hier insbesondere verstanden werden, dass diese durch eine, vorzugsweise eine einzige Bewegung in eine gleiche Richtung, insbesondere entlang der jeweiligen Haupterstreckungsrichtung und vorzugsweise entlang der Montagerichtung, erfolgt.

### Zeichnung

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem Wischblatt, einem Wischarm und einer Wischervorrichtung in einer schematischen Draufsicht,
- Fig. 2: einen Teil der Wischervorrichtung mit einem Wischarmadapter und einem Wischblattadapter in einer schematischen Draufsicht,
- Fig. 3: einen Teil der Wischervorrichtung mit dem Wischarmadapter und dem Wischblattadapter in einer schematischen Seitenansicht,
- Fig. 4: einen Teil der Wischervorrichtung mit einem Wischarmkanalelement und ein Wischblattkanalelement in einer halbgeschnittenen Darstellung in einem voneinander getrennten Zustand,
- Fig. 5: einen Teil der Wischervorrichtung mit einem Wischarmkanalelement und ein Wischblattkanalelement in einer halbgeschnittenen Darstellung in einem gekoppelten Zustand und
- Fig. 6: einen schematischen Verfahrensablauf eines Verfahrens zur Montage der Wischervorrichtung.

### Beschreibung des Ausführungsbeispiels

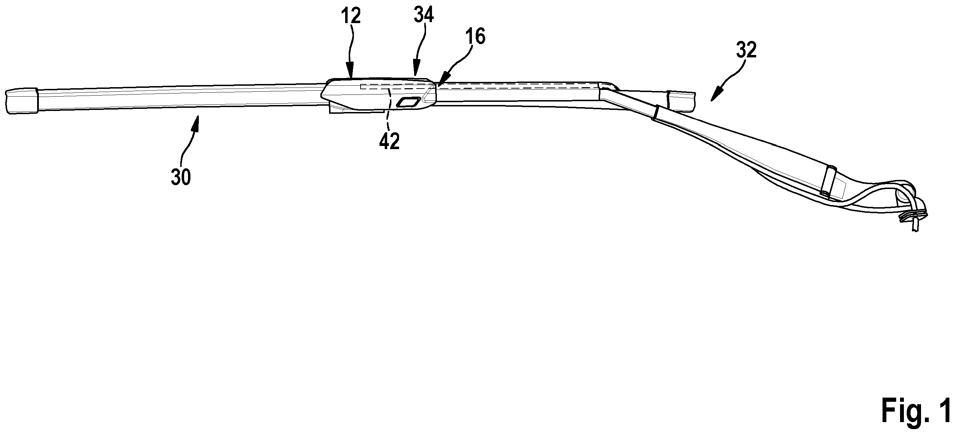

Figur 1 zeigt ein System mit einem Wischblatt 30, einem Wischarm 32 und mit einer Wischervorrichtung. Die Wischervorrichtung ist im vorliegenden Fall als eine Scheibenwischervorrichtung ausgebildet.

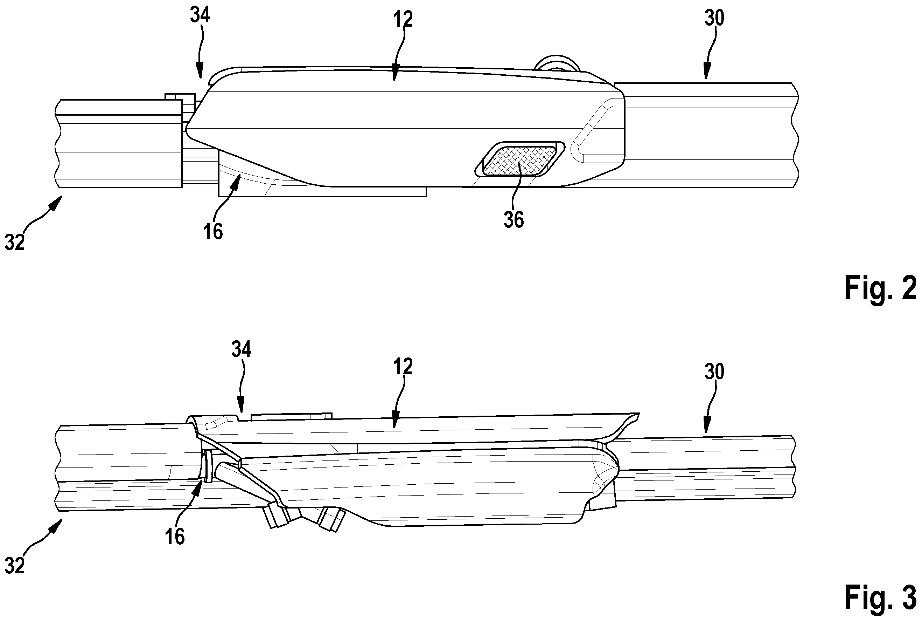

In den Figuren 2 bis 5 ist die Wischervorrichtung in verschiedenen Darstellungen gezeigt. Die Wischervorrichtung weist einen Wischblattadapter 12 auf. Ferner weist die Wischervorrichtung einen Wischarmadapter 10 auf. Über den Wischblattadapter 12 und den Wischarmadapter 10 sind das Wischblatt 30 und der Wischarm 32 miteinander koppelbar. Im vorliegenden Fall sind zur Kopplung des Wischarms 32 mit dem Wischblatt 30 der Wischarmadapter 10 und der Wischblattadapter 12 entlang einer Haupterstreckungsrichtung miteinander koppelbar, insbesondere miteinander verrastbar. Der Wischarmadapter 10 und der Wischblattadapter 12 bilden Side-Lock-Adapter aus. Alternativ oder zusätzlich könnten zur Kopplung des Wischarms mit dem Wischblatt der Wischarmadapter und der Wischblattadapter senkrecht einer Haupterstreckungsrichtung koppelbar sein. Die Kopplung ist lösbar ausgebildet. Im vorliegenden Fall umfasst der Wischblattadapter 12 zumindest ein Betätigungselement 36, mittels welchem die Kopplung lösbar ist.

Zur Kopplung weist der Wischblattadapter 12 wenigstens ein Führungselement 28 auf. Das Führungselement 28 ist bei einer Kopplung dazu vorgesehen, mit dem Wischarmadapter 10 diesen zumindest teilweise zu führen. Der Wischarmadapter 10 umfasst ein korrespondierendes Führungselement 38. Das korrespondierende Führungselement 38 ist korrespondierend zu dem Führungselement 28 ausgebildet.

Ferner weist die Wischervorrichtung eine Sprüheinheit 34 auf. Die Sprüheinheit 34 ist zu einer Verteilung und/oder einem Auslass von Waschwasser vorgesehen. Die Sprüheinheit 34 umfasst zumindest einen Waschwasserkanal 42. Der Waschwasserkanal 42 ist zur Bereitstellung von Waschwasser vorgesehen.

Der Waschwasserkanal 42 weist zumindest ein Wischblattkanalelement 16 auf. Das Wischblattkanalelement 16 ist wischblattseitig angeordnet. Das Wischblattkanalelement 16 ist an dem Wischblatt 30 angeordnet. Im vorliegenden Fall ist das Wischblattkanalelement 16 Teil des Wischblattadapters 12. Alternativ könnte ein Wischblattkanalelement separat von dem Wischblattadapter ausgebildet sein. Insbesondere für diesen Fall könnte ein Wischblattkanalelement separat mit einem Wischblatt koppelbar sein.

Das Wischblattkanalelement 16 des Wischblattadapters 12 weist eine Haupterstreckung auf, welche zumindest im Wesentlichen parallel zur Haupterstreckungsrichtung des Wischblattadapters 12 ausgerichtet ist. Das Führungselement 28 des Wischblattadapters 12 ist von dem Wischblattkanalelement 16 ausgebildet. Im vorliegenden Fall ist das Wischblattkanalelement 16 des Wischblattadapters 12 zumindest teilweise einstückig an einen Grundkörper 44 des Wischblattadapters 12 angeformt. Der Grundkörper 44 überdeckt das Wischblattkanalelement 16 zumindest teilweise, insbesondere betrachtet in einer Richtung senkrecht zu einer Wischfläche. Der Wischblattadapter 12 weist zumindest ein Sprühdüsenelement 20 auf. Das Sprühdüsenelement 20 ist zumindest teilweise einstückig mit dem Wischblattkanalelement 16 des Wischblattadapters 12 ausgebildet. Das Sprühdüsenelement 20 weist zumindest zwei Düsenöffnungen auf. Das Sprühdüsenelement 20 ist derart angeordnet, dass der Grundkörper 44 das Sprühdüsenelement 20 zumindest teilweise überdeckt, und zwar insbesondere betrachtet in einer Richtung senkrecht zu einer Wischfläche. Alternativ könnte das Wischblattkanalelement auf eine andere Art und Weise mit dem Grundkörper verbunden sein, wie beispielsweise durch einen Form- und/oder Kraftschluss. Ferner könnte der Wischblattadapter über weitere Sprühdüsenelemente verfügen, welche insbesondere einstückig mit dem Wischblattkanal ausgebildet sein können. Ferner könnte eine Sprühdüse eine von der hier dargestellten Anzahl abweichende Anzahl an Düsenöffnungen aufweisen.

Das Wischblattkanalelement 16 des Wischblattadapters 12 ist zumindest teilweise als zylinderförmige Aussparung 18 ausgebildet. Das als Aussparung 18 ausgebildete Teil des Wischblattkanalelements 16 ist dazu vorgesehen, bei einer Kopplung ein Wischarmkanalelement 14 in Haupterstreckungsrichtung des Wischblattadapters 12 zu führen. Die Aussparung 18 weist eine Verjüngung 46 auf. Die Aussparung 18 verjüngt sich entlang der Haupterstreckung des Wischblattkanalelements 16. Im vorliegenden Fall ist die Verjüngung 46 stufenartig ausgebildet. Alternativ oder zusätzlich könnte die Verjüngung kontinuierlich ausgebildet sein.

Der Waschwasserkanal 42 weist zumindest ein Wischarmkanalelement 14 auf. Das Wischarmkanalelement 14 ist wischarmseitig angeordnet. Das Wischarmkanalelement 14 ist an dem Wischarm 32 angeordnet. Alternativ könnte das Wischarmkanalelement separat von dem Wischarmadapter ausgebildet sein. Insbesondere für diesen Fall könnte das Wischarmkanalelement separat mit dem Wischarm koppelbar sein.

Das Wischarmkanalelement 14 weist eine Haupterstreckung auf, welche zumindest im Wesentlichen parallel zur Haupterstreckungsrichtung des Wischarmadapters 10 gerichtet ist. Das korrespondierende Führungselement 38 des Wischarmadapters 10 ist von dem Wischarmkanalelement 14 ausgebildet. Im vorliegenden Fall ist das Wischarmkanalelement 14 des Wischarmadapters 10 zumindest teilweise einstückig an einem Grundkörper 48 des Wischarmadapters 10 angeformt. Alternativ könnte das Wischarmkanalelement auf eine andere Art und Weise mit dem Grundkörper des Wischarmadapters verbunden sein, wie beispielsweise durch einen Form- und/oder Kraftschluss.

Das Wischarmkanalelement 14 umfasst zumindest ein Sprühdüsenelement 26. Das Sprühdüsenelement 26 ist in einem gekoppelten Zustand des Wischarmkanalelements 14 mit dem Wischblattkanalelement 16 außerhalb des Wischblattkanalelements 14 angeordnet. Ferner ist in dem gekoppelten Zustand des Wischblattkanalelements 16 mit dem Wischarmkanalelement 14 das Sprühdüsenelement 28 zumindest teilweise, von dem Grundkörper 44 des Wischblattadapters 12 überdeckt, und zwar insbesondere betrachtet in einer Richtung senkrecht zu einer Wischfläche.

Das Wischarmkanalelement 14 weist einen Dichtungsvorsprung 22 auf. Der Dichtungsvorsprung 22 ist dazu vorgesehen, sich in einer Wandung 24 des Wischblattkanalelements 16 zumindest teilweise zu verklemmen und/oder in diese einzuschneiden. Der Dichtungsvorsprung 22 weist zumindest teilweise eine Konusform auf. Das Wischarmkanalelement 14 und das Wischblattkanalelement 16 sind wasserdicht miteinander verbunden. Das Wischarmkanalelement 14 ist in Haupterstreckungsrichtung des Wischblattadapters 12 mit dem Wischblattkanalelement 16 des Wischblattadapters 12 koppelbar. Das Wischarmkanalelement 14 weist zumindest ein Anschlagselement 40 auf. Das Anschlagselement 40 ist dazu vorgesehen ein Einführen des Wischarmkanalelements 14 in das Wischblattkanalelement 16 entlang der Haupterstreckungsrichtung des Wischblattadapters 12 zu beschränken.

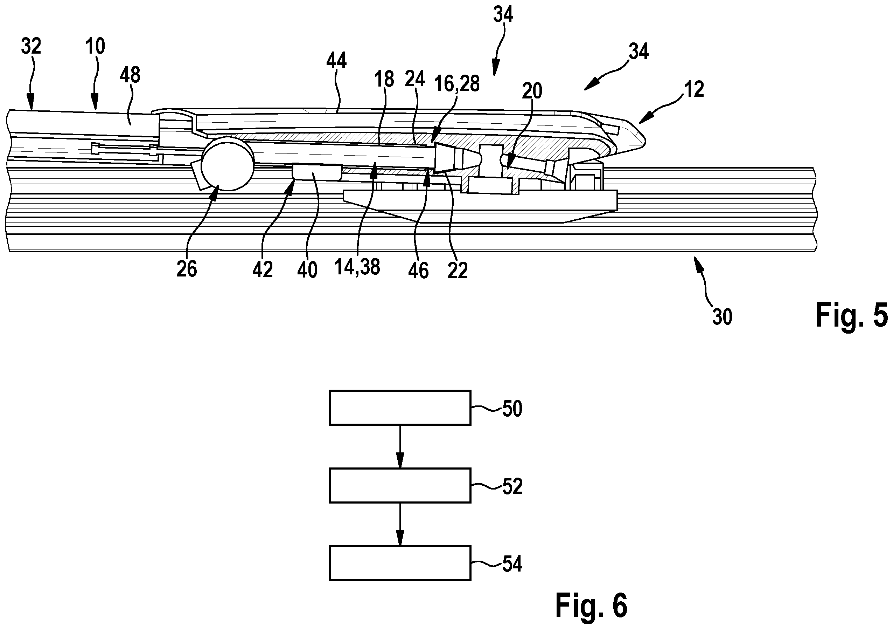

Figur 6 zeigt einen schematischen Ablaufplan eines Verfahrens zur Montage der Wischervorrichtung.

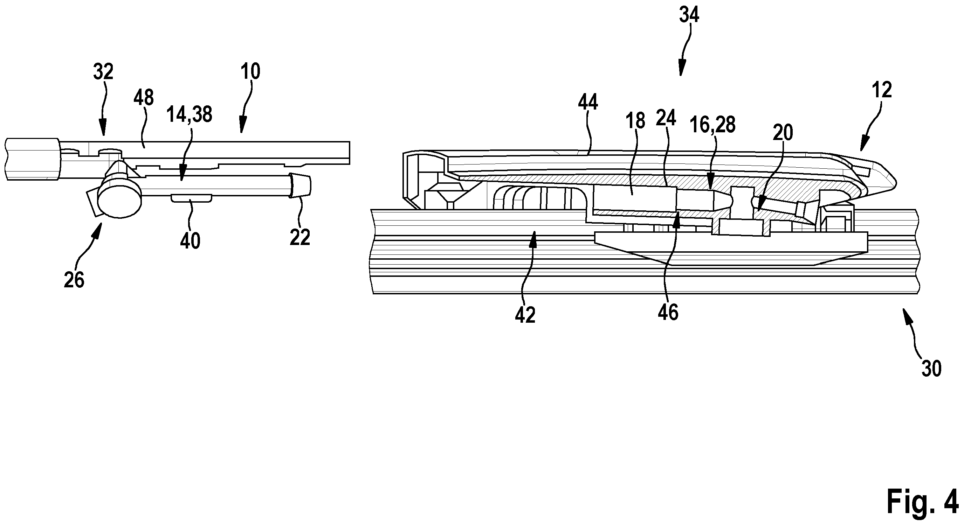

Das Verfahren umfasst einen Verfahrensschritt 50. Der Verfahrensschritt 50 ist in der Figur 4 dargestellt. In dem Verfahrensschritt 50 werden der Wischblattadapter 12 und der Wischarmadapter 10 zueinander parallel ausgerichtet. Dazu wird die Haupterstreckungsrichtung des Wischblattadapters 12 parallel zur Haupterstreckungsrichtung des Wischarmadapters 10 ausgerichtet. Ferner werden der Wischblattadapter 12 und der Wischarmadapter 10 derart parallel ausgerichtet, dass deren Haupterstreckungsrichtungen zusammenfallen.

Das Verfahren umfasst einen weiteren Verfahrensschritt 52. In dem Verfahrensschritt 52 werden zur Kopplung des Wischblattadapters 12 mit dem Wischarmadapter 10 diese in einer Montagerichtung aufeinanderzubewegt. Die Montagerichtung ist dabei parallel zur Haupterstreckungsrichtung des Wischblattadapters 12 und/oder zur Haupterstreckungsrichtung des Wischarmadapters 10. Dazu werden der Wischblattadapter 12 und der Wischarmadapter 10 in einer insbesondere kontinuierlichen Bewegung in Montagerichtung aufeinanderzubewegt. Dabei werden das Führungselement 28 und das korrespondierende Führungselement 38 ineinander eingeführt. Das Führungselement 28 ist von dem Wischarmkanalelement 14 ausgebildet. Das korrespondierende Führungselement 38 ist von dem Wischblattkanalelement 16 ausgebildet. Der Wischblattadapter 12 und der Wischarmadapter 10 werden miteinander verrastet, und zwar insbesondere durch ineinander Einklipsen.

Das Verfahren umfasst zumindest einen weiteren Verfahrensschritt 54. Der Verfahrensschritt 54 ist in der Figur 5 dargestellt. Der Verfahrensschritt 54 erfolgt gleichzeitig mit dem Verfahrensschritt 52. Diese sind im vorliegenden Fall nur der Übersichtlichkeit halber separat voneinander benannt. In dem weiteren Verfahrensschritt 54 erfolgt bei einer Kopplung des Wischarmadapters 10 mit dem Wischblattadapter 12 automatisch eine Kopplung des Wischarmkanalelements 14 mit dem Wischblattkanalelement 16. Das Wischarmkanalelement 14 wird mit dem Wischblattkanalelement 16 gekoppelt, indem das Wischarmkanalelement 14 zumindest teilweise in das Wischblattkanalelement 16 eingeführt wird. Dies erfolgt vorzugsweise gleichzeitig mit der Einführung des Führungselements 28 und des korrespondierenden Führungselements 38. Der Dichtungsvorsprung 22 wird entlang der Haupterstreckungsrichtung des Wischarmadapters 10 in die Aussparung 18 geführt. Mittels der Verjüngung 46 der Aussparung 18 verklemmt sich der Dichtungsvorsprung 22. Der Dichtungsvorsprung 22 schneidet ferner in die Wandung 24 des Wischblattkanals ein.

## Patentansprüche

1. Wischervorrichtung, insbesondere Scheibenwischervorrichtung, mit einem Wischarmadapter (10) und mit einem Wischblattadapter (12), und mit einem Wischarmkanalelement (14) einer Sprüheinheit (34), wobei der Wischarmadapter (10) dazu vorgesehen ist, in der Haupterstreckungsrichtung des Wischblattadapters (12) mit dem Wischblattadapter (12) gekoppelt zu werden, **und** wobei das Wischarmkanalelement (14) dazu vorgesehen ist, in Haupterstreckungsrichtung des Wischblattadapters (12) mit einem Wischblattkanalelement (16) des Wischblattadapters (12) gekoppelt zu werden, wobei die Haupterstreckungsrichtung des Wischblattadapters (12) parallel zu einer längsten Kante eines kleinsten geometrischen Quaders verläuft, welcher den Wischblattadapter (12) gerade noch vollständig umschließt , **dadurch gekennzeichnet, dass** der Wischblattadapter (12) zumindest ein Sprühdüsenelement (20) aufweist, welches zumindest teilweise einstückig mit dem Wischblattkanalelement (16) ausgebildet ist, wobei das Sprühdüsenelement (20), betrachtet in einer Richtung senkrecht zu einer Wischfläche, von einem Grundkörper (44) des Wischblattadapters (12) zumindest zu einem Großteil überdeckt ist.

2. Wischervorrichtung nach Anspruch 1, **dadurch gekennzeichnet, dass** das Wischblattkanalelement (16) eine Haupterstreckung aufweist, welche zumindest im Wesentlichen parallel zur Haupterstreckungsrichtung des Wischblattadapters (12) ausgerichtet ist.

3. Wischervorrichtung nach Anspruch 1 oder 2, **dadurch gekennzeichnet, dass** das Wischblattkanalelement (16) zumindest teilweise einstückig an den Grundkörper (44) des Wischblattadapters (12) angeformt ist.

4. Wischervorrichtung nach Anspruch 3, **dadurch gekennzeichnet, dass** das Wischblattkanalelement (16) zumindest teilweise als zylinderförmige Aussparung (18) ausgebildet und dazu vorgesehen ist, das Wischarmkanalelement (14) zu einer Kopplung in Haupterstreckungsrichtung des Wischblattadapters (12) zu führen.

5. Wischervorrichtung nach einem der vorhergehenden Ansprüche, **dadurch gekennzeichnet, dass** das Wischarmkanalelement (14) einen Dichtungsvorsprung (22) aufweist, welcher dazu vorgesehen ist, sich in eine Wandung (24) des Wischblattkanalelements (16) zumindest teilweise einzuklemmen.

6. Wischervorrichtung nach Anspruch 5, **dadurch gekennzeichnet, dass** der Dichtungsvorsprung (22) zumindest teilweise eine Konusform aufweist.

7. Wischervorrichtung nach einem der vorhergehenden Ansprüche, **dadurch gekennzeichnet, dass** das Wischarmkanalelement (14) zumindest ein Sprühdüsenelement (26) aufweist, welches in einem montierten Zustand außerhalb des Wischblattkanalelements (16) angeordnet ist.

8. Wischervorrichtung nach einem der vorhergehenden Ansprüche, **dadurch gekennzeichnet, dass** der Wischblattadapter (12) wenigstens ein Führungselement (28) aufweist, welches bei einer Kopplung mit dem Wischarmadapter (10) dazu vorgesehen ist, den Wischarmadapter (10) zumindest teilweise zu führen.

9. System mit einem Wischblatt (30), mit einem Wischarm (32) und mit einer Wischervorrichtung nach einem der Ansprüche 1 bis 8.

## Claims

1. Wiper device, in particular windscreen wiper device, having a wiper arm adapter (10) and having a wiper blade adapter (12), and having a wiper arm channel element (14) of a spray unit (34), wherein the wiper arm adapter (10) is provided for coupling to the wiper blade adapter (12) in the main extension direction of the wiper blade adapter (12), and wherein the wiper arm channel element (14) is provided for coupling to a wiper blade channel element (16) of the wiper blade adapter (12) in a main extension direction of the wiper blade adapter (12), wherein the main extension direction of the wiper blade adapter (12) runs parallel to a longest edge of a smallest geometric cuboid which only just completely encloses the wiper blade adapter (12), **characterized in that** the wiper blade adapter (12) has at least one spray nozzle element (20) which is configured at least partially integrally with the wiper blade channel element (16), wherein the spray nozzle element (20) is covered by a base body (44) of the wiper blade adapter (12), at least to a large extent, when viewed in a direction perpendicular to a wiping surface.

2. Wiper device according to Claim 1, **characterized in that** the wiper blade channel element (16) has a main extension which is oriented at least substantially parallel to the main extension direction of the wiper blade adapter (12).

3. Wiper device according to Claim 1 or 2, **characterized in that** the wiper blade channel element (16) is at least partially integrally formed on the base body (44) of the wiper blade adapter (12).

4. Wiper device according to Claim 3, **characterized in that** the wiper blade channel element (16) is at least partially configured as a cylindrical cutout (18) and is provided to guide the wiper arm channel element (14) for coupling in the main extension direction of the wiper blade adapter (12).

5. Wiper device according to one of the preceding claims, **characterized in that** the wiper arm channel element (14) has a sealing projection (22) which is provided to be at least partially wedged into a wall (24) of the wiper blade channel element (16).

6. Wiper device according to Claim 5, **characterized in that** the sealing projection (22) has at least partially a conical shape.

7. Wiper device according to one of the preceding claims, **characterized in that** the wiper arm channel element (14) has at least one spray nozzle element (26) which in a mounted state is arranged outside the wiper blade channel element (16).

8. Wiper device according to one of the preceding claims, **characterized in that** the wiper blade adapter (12) has at least one guide element (28) which, when coupled to the wiper arm adapter (10), is provided at least partially to guide the wiper arm adapter (10).

9. System having a wiper blade (30), having a wiper arm (32) and having a wiper device according to one of Claims 1 to 8.

## Revendications

1. Dispositif d'essuyage, notamment dispositif d'essuie-glace, avec un adaptateur de bras d'essuie-glace (10) et avec un adaptateur de balai d'essuie-glace (12), et avec un élément de canal de bras d'essuie-glace (14) d'une unité de pulvérisation (34), l'adaptateur de bras d'essuie-glace (10) étant prévu pour être couplé à l'adaptateur de balai d'essuie-glace (12) dans la direction d'extension principale de l'adaptateur de balai d'essuie-glace (12), et l'élément de canal de bras d'essuie-glace (14) étant prévu pour être couplé à un élément de canal de balai d'essuie-glace (16) de l'adaptateur de balai d'essuie-glace (12) dans la direction d'extension principale de l'adaptateur de balai d'essuie-glace (12), la direction d'extension principale de l'adaptateur de balai d'essuie-glace (12) s'étendant parallèlement à une arête la plus longue d'un plus petit parallélépipède géométrique qui entoure tout juste complètement l'adaptateur de balai d'essuie-glace (12), **caractérisé en ce que** l'adaptateur de balai d'essuie-glace (12) présente au moins un élément de buse de pulvérisation (20), qui est réalisé au moins partiellement d'une seule pièce avec l'élément de canal de balai d'essuie-glace (16), l'élément de buse de pulvérisation (20), vu dans une direction perpendiculaire à une surface d'essuyage, étant recouvert au moins en grande partie par un corps de base (44) de l'adaptateur de balai d'essuie-glace (12),

2. Dispositif d'essuyage selon la revendication 1, **caractérisé en ce que** l'élément de canal de balai d'essuie-glace (16) présente une extension principale qui est orientée au moins essentiellement parallèlement à la direction d'extension principale de l'adaptateur de balai d'essuie-glace (12).

3. Dispositif d'essuyage selon la revendication 1 ou 2, **caractérisé en ce que** l'élément de canal de balai d'essuie-glace (16) est formé au moins partiellement d'une seule pièce avec le corps de base (44) de l'adaptateur de balai d'essuie-glace (12),

4. Dispositif d'essuyage selon la revendication 3, **caractérisé en ce que** l'élément de canal de balai d'essuie-glace (16) est réalisé au moins partiellement sous forme d'évidement (18) cylindrique et est prévu pour guider l'élément de canal de bras d'essuie-glace (14) vers un couplage dans la direction d'extension principale de l'adaptateur de balai d'essuie-glace (12).

5. Dispositif d'essuyage selon l'une quelconque des revendications précédentes, **caractérisé en ce que** l'élément de canal de bras d'essuie-glace (14) présente une saillie d'étanchéité (22) prévue pour se coincer au moins partiellement dans une paroi (24) de l'élément de canal de balai d'essuie-glace (16).

6. Dispositif d'essuyage selon la revendication 5, **caractérisé en ce que** la saillie d'étanchéité (22) présente au moins partiellement une forme conique.

7. Dispositif d'essuyage selon l'une quelconque des revendications précédentes, **caractérisé en ce que** l'élément de canal de bras d'essuie-glace (14) présente au moins un élément de buse de pulvérisation (26) qui, dans un état monté, est agencé à l'extérieur de l'élément de canal de balai d'essuie-glace (16).

8. Dispositif d'essuyage selon l'une quelconque des revendications précédentes, **caractérisé en ce que** l'adaptateur de balai d'essuie-glace (12) présente au moins un élément de guidage (28) qui, lors d'un couplage à l'adaptateur de bras d'essuie-glace (10), est prévu pour guider au moins partiellement l'adaptateur de bras d'essuie-glace (10).

9. Système avec un balai d'essuie-glace (30), avec un bras d'essuie-glace (32) et avec un dispositif d'essuyage selon l'une quelconque des revendications 1 à 8.
